# EUROPÄISCHE PATENTANMELDUNG

(11) **EP 3 950 390 A1**
(43) Veröffentlichungstag der Anmeldung: **09.02.2022**
(21) Anmeldenummer: 21185720.6
(22) Anmeldetag: 15.07.2021
(51) Int. Cl.: B60C 99/00

(54) **REIFENTEMPERIERANORDNUNG**

(30) Priorität: 04.08.2020 DE 202020104491 U
(71) Anmelder: Alber, Götz Linus, 72458 Albstadt-Ebingen (DE); Alber, Markus, 72458 Albstadt-Ebingen (DE)
(72) Erfinder: Alber, Götz Linus, 72458 Albstadt-Ebingen (DE); Alber, Markus, 72458 Albstadt-Ebingen (DE)
(74) Vertreter: Kohler Schmid Möbus Patentanwälte

(57) **Zusammenfassung**

Eine Reifentemperieranordnung (10, 100) zur Temperierung von Reifen (16, 18, 20, 22) vor deren Montage auf einer Felge umfasst eine Bodenplatte (12), auf der ein oder mehrere zu erwärmende Reifen (16, 18, 20, 22) stapelbar sind, wobei an der Bodenplatte (12) eine sich vertikal von der Bodenplatte (12) nach oben erstreckende Heizanordnung (14) angeordnet, sodass diese in die Felgenaufnahme des oder der Reifen (16, 18, 20, 22) ragt, wenn diese auf der Bodenplatte (12) gestapelt sind.

## Beschreibung

Die Erfindung betrifft eine Reifentemperieranordnung zur Temperierung von Reifen vor deren Montage auf einer Felge.

Bei der Montage von sogenannten Runflat-Reifen und UHP-Reifen bestehen besondere Anforderungen. UHP-Reifen sind Ultra-High-Performance-Reifen, also Breitreifen ab 17 Zoll. Runflat-Reifen sind Reifen mit speziellen Notlaufeigenschaften, die es erlauben, auch bei Reifendruckverlust noch mit einer Geschwindigkeit von bis zu 80 km/h zu fahren. Die obengenannten Reifen weisen im Vergleich zu normalen Reifen steifere Reifenseitenwände auf. Bei der Montage können auf den Reifen einwirkende Kräfte aufgrund der steifen Reifenseitenwände direkt auf den Wulstbereich eingeleitet werden und diesen beschädigen. Daher sollte die Reifenkerntemperatur bei der Montage auf die Felge mindestens 15 °C betragen. Die Idealtemperatur liegt bei etwa 24 °C.

Andererseits sollte die Temperatur der Reifen bei der Montage auf die Felge nicht über 32 °C. liegen, da das einzusetzende Schmiermittel bei höheren Temperaturen verdunstet und die Viskosität des Reifengummis wieder zunehmen kann. Auch dies kann dazu führen, dass der Wulstbereich beschädigt wird.

Aus der DE 20 2008 018 437 U1 ist eine Reifentemperiervorrichtung bekannt. Für diese Reifentemperiervorrichtung besteht jedoch ein erhöhter Platzbedarf. Außerdem ist sie relativ aufwändig aufgebaut.

Aufgabe der vorliegenden Erfindung ist es, eine Reifentemperiervorrichtung bereitzustellen, die besonders effektiv ist und besonders einfach aufgebaut ist.

Gelöst wird diese Aufgabe erfindungsgemäß durch eine Reifentemperieranordnung zur Temperierung von Reifen vor deren Montage auf einer Felge, umfassend eine Bodenplatte, auf der ein oder mehrere zu erwärmende Reifen stapelbar sind, wobei an der Bodenplatte eine sich vertikal von der Bodenplatte nach oben erstreckende Heizanordnung angeordnet ist, sodass diese in die Felgenaufnahme des oder der Reifen ragt, wenn diese auf der Bodenplatte gestapelt sind. Die erfindungsgemäße Reifentemperieranordnung kommt somit ohne ein Gehäuse aus. Die Heizanordnung ist in den Reifen bzw. in dem Reifenstapel angeordnet. Anders als bei bekannten Reifentemperieranordnungen werden die zu erwärmenden Reifen nicht parallel nebeneinandergestellt, sondern auf die Bodenplatte gestapelt. Auf diese Art und Weise werden die Reifen schonend von innen nach außen erwärmt.

Gemäß einer ausführungsform ist ein Deckelelement zur Ablage auf dem Reifenstapel vorgesehen, um Wärmetransfer per Luftzirkulation innerhalb des Reifenstapels zu erzwingen. Dadurch, dass die Heizanordnung in dem Reifenstapel angeordnet ist, ist nur ein Deckelelement und eine Bodenplatte notwendig. Das übrige "Gehäuse" für die Erwärmung der Reifen wird durch die Reifen selbst gebildet.

Die Heizanordnung kann eine Heizquelle, einen Lüfter und einen Luftkanal umfassen. Dabei kann der Lüfter im Bereich eines Endes des Luftkanals, bspw. eines Rohrs, angeordnet sein. Alternativ kann der Lüfter im Luftkanal, insbesondere beabstandet von beiden Enden, angeordnet sein. Grundsätzlich kann die Heizquelle an unterschiedlichen Stellen angeordnet sein. Insbesondere kann die Heizquelle auch im Luftkanal angeordnet sein. Vorzugsweise ist die Heizquelle in der Nähe des Lüfters angeordnet. Dabei kann die Heizquelle durch den Lüfter angeströmt werden oder der Lüfter kann Luft durch die Heizquelle saugen und anschließend in den durch die Reifen gebildeten Hohlraum ausströmen.

Die Heizquelle kann als geripptes oder ungeripptes Rohrheizelement oder PTC-Heizelement ausgebildet sein. Derartige elektrische Heizelemente sind kostengünstig verfügbar und genau regulierbar. Außerdem können Sie mit Luft durchströmt werden. Vorzugsweise entspricht die Fläche der Heizquelle in etwa der Fläche des Lüfters. Insbesondere können die Heizquelle und der Lüfter in etwa den gleichen Durchmesser aufweisen.

Es kann eine Steuerung oder Regelung für die Heizquelle und/oder den Lüfter vorgesehen sein. Insbesondere kann eine Temperatursteuerung oder -regelung und/oder eine zeitliche Steuerung vorgesehen sein. Über eine Steuerung oder Regelung kann vermieden werden, dass die Reifen auf eine zu hohe Temperatur erwärmt werden. Weiterhin kann eine automatische Abschaltung der Heizquelle erfolgen, wenn eine vorgegebene Temperatur erreicht wurde. Zu diesem Zweck ist es vorteilhaft, wenn ein Temperatursensor vorgesehen ist. Weiterhin ist denkbar, dass ein Signalgeber vorgesehen ist, der ein Signal ausgibt, wenn die Reifen eine vorgegebene Temperatur erreicht haben.

Grundsätzlich ist es denkbar, den Lüfter als Axiallüfter auszubilden, insbesondere, wenn dieser im Luftkanal angeordnet ist. Besondere Vorteile ergeben sich jedoch, wenn der Lüfter als Radiallüfter ausgebildet ist. Dabei kann der Radiallüfter direkt an der Bodenplatte angeordnet sein und im Bereich der Bodenplatte warme Luft radial ausströmen. Die warme Luft kann dann nach oben steigen und im Bereich des Deckelelements durch den Luftkanal wieder angesaugt werden. Dadurch ergibt sich eine zirkulierende Beheizung der Reifen.

Besondere Vorteile ergeben sich, wenn der Luftkanal längenverstellbar ausgebildet ist, insbesondere teleskopierbar ist. Dadurch kann der Luftkanal an unterschiedlich hohe Reifenstapel angepasst werden. Unterschiedliche Höhen ergeben sich bspw. durch eine unterschiedliche Anzahl von zu erwärmenden Reifen oder durch unterschiedliche Breiten von Reifen. Außerdem kann der Luftkanal dadurch verkürzt werden, was den Transport der Reifentemperieranordnung und deren Lagerung vereinfacht.

An der Bodenplatte, insbesondere an deren Unterseite, können Rollen oder Räder angeordnet sein. Dadurch ist die Reifentemperieranordnung in einer Werkstatt besonders einfach bewegbar. Insbesondere kann der erwärmte Reifenstapel besonders einfach zu der Maschine transportiert werden, mit der die Reifen auf die Felgen montiert werden. Weiterhin kann die Reifentemperieranordnung bei Nichtgebrauch einfach aus dem Weg geräumt werden.

Die Bodenplatte kann aus einem thermisch isolierenden Material, insbesondere Holz, ausgebildet sein. Insbesondere kann die Bodenplatte aus Schichtholz, vorzugsweise beschichtetem Schichtholz, ausgebildet sein. Holz ist ein besonders kostengünstiger Werkstoff. Außerdem wirkt Holz isolierend. Die vorgesehenen Temperaturen, bei denen die Reifentemperieranordnung betrieben wird, sind nicht so hoch, dass eine Brandgefahr besteht.

Wie bereits erwähnt, kann ein Temperatursensor vorgesehen sein. Der Temperatursensor kann dabei vorzugsweise am Deckelelement angeordnet sein. Besondere Vorteile ergeben sich, wenn der Temperatursensor außerhalb des Reifenstapels am Deckelelement angeordnet ist. Dadurch kann die Temperatur an der Außenseite eines Reifens erfasst werden. Wenn demnach die Außenseite eines Reifens, insbesondere des obersten Reifens, eine vorgegebene Temperatur erreicht hat, kann man davon ausgehen, das auch die Reifenkerntemperatur hoch genug ist, damit der Reifen an einer Felge montiert werden kann.

Im Bereich der Bodenplatte kann zumindest ein Luftleitelement vorgesehen sein. Dies bringt insbesondere dann Vorteile, wenn ein Radiallüfter im Bereich der Bodenplatte vorgesehen ist. Durch das Luftleitelement kann die Luft nach oben geleitet werden. Dadurch kann vermieden werden, dass der unterste oder die unteren Reifen zu stark erwärmt werden, insbesondere deutlich schneller und dabei auf eine höhere Temperatur erwärmt werden, als die weiter oben angeordneten Reifen. Insbesondere kann verhindert werden, dass die unteren Reifen direkt mit warmer Luft angeströmt werden.

Wenn eine Anzeigeeinrichtung vorgesehen ist, können mit der Reifentemperieranordnung in Beziehung stehende Parameter angezeigt werden. Insbesondere kann die Temperatur des Reifenstapels angezeigt werden. Alternativ oder zusätzlich kann angezeigt werden, wie lange die Reifentemperieranordnung bereits in Betrieb ist und die Reifen erwärmt werden.

Besonders vorteilhaft ist es, wenn die Reifentemperieranordnung demontierbar ist. Dadurch kann sie bei Nichtgebrauch besonders platzsparend aufbewahrt werden.

Weitere Merkmale und Vorteile der Erfindung werden anhand der nachfolgenden Beschreibung von Ausführungsbeispielen anhand der Figuren der Zeichnungen erläutert.

Es zeigen:
- Fig. 1:: eine erste Ausführungsform einer Reifentemperieranordnung;
- Fig. 2:: eine zweite Ausführungsform einer Reifentemperieranordnung.

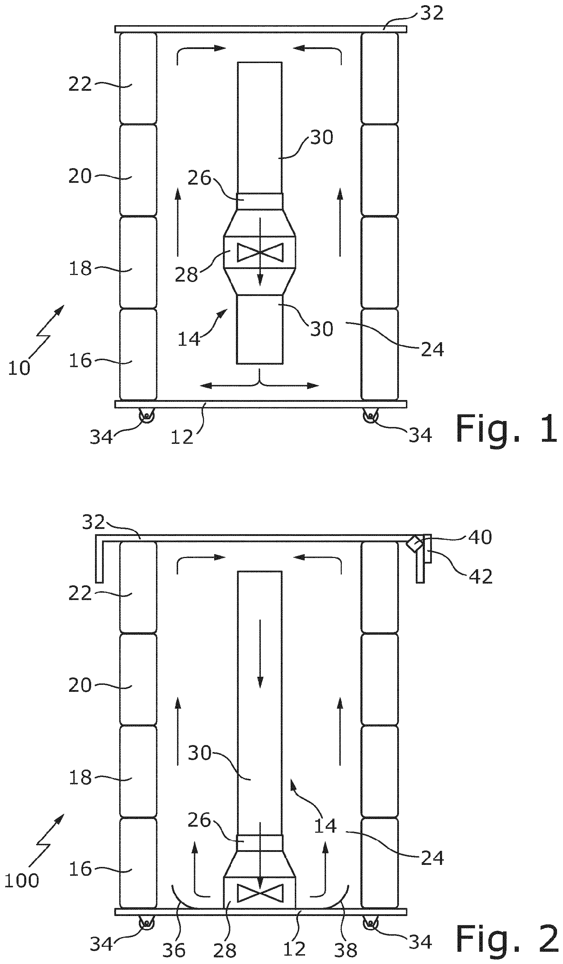

Die Fig. 1 zeigt eine Reifentemperieranordnung 10 mit einer Bodenplatte 12 und einer Heizanordnung 14. Auf der Bodenplatte 12 sind vier Reifen 16 - 22 gestapelt. Gezeigt ist ein Schnitt durch die Reifen 16 - 22. Die Heizanordnung 14 ist in dem durch die Reifen 16 - 22 gebildeten Hohlraum 24 angeordnet, wobei der Hohlraum 24 durch die Felgenaufnahmeräume der einzelnen Reifen 16 - 22 gebildet ist. Die gezeigte Heizanordnung 14 weist eine Heizquelle 26 auf, die in Strömungsrichtung vor einem als Axiallüfter ausgebildeten Lüfter 28 angeordnet ist.

Weiterhin weist die Heizanordnung 14 einen rohrförmig ausgebildeten Luftkanal 30 auf. Oben ist der Reifenstapel durch ein Deckelelement 32 abgedeckt. Der Lüfter 28 saugt Luft am oberen Ende des Luftkanals 30 an, sodass die Luft durch die Heizquelle 26 und den Lüfter 28 geführt wird und am unteren Ende des Luftkanals 30 wieder austritt. Dort verteilt sich die Luft entsprechend der gezeigten Pfeilrichtung entlang der Bodenplatte 12 und steigt dann wieder nach oben, wo sie wieder am oberen Ende des Luftkanals 30 eingesaugt wird.

Die Bodenplatte 12 weist Rollen 34 auf, um deren Transport zu vereinfachen.

Die Fig. 2 zeigt eine alternative Ausgestaltung einer Reifentemperieranordnung 100. Sich entsprechende Bauteile werden mit den gleichen Bezugsziffern bezeichnet wir in der Fig. 1. In dem gezeigten Ausführungsbeispiel der Fig. 2 ist der Lüfter 28 direkt an der Bodenplatte 12 angeordnet. Der Lüfter 28 ist als Radiallüfter ausgebildet. Dies bedeutet, dass Luft radial unten entlang der Bodenplatte 12 ausgeströmt wird. Die Luft wird durch Luftleitelemente 36, 38 die an der Bodenplatte 12 angeordnet sind und nach oben gebogen ausgebildet sind, umgelenkt. Es kann auch nur ein ringförmiges bzw. trichterförmiges Luftleitelement vorgesehen sein.

Durch das oder die Luftleitelemente 36, 38 wird zum einen eine Richtung des Luftstroms vorgegeben, zum anderen wird verhindert, dass der Reifen 16 zu stark erwärmt wird.

Oberhalb des Lüfters 28 ist die Heizquelle 26 angeordnet, an die sich nach oben der Luftkanal 30 anschließt. Wie in der Fig. 1 ist somit die Heizanordnung 14 vertikal ausgerichtet und erstreckt sich von der Bodenplatte 12 aus nach oben im Hohlraum 24, der durch die Reifen 16 - 22 gebildet ist.

Der Luftkanal 30 ist längenveränderlich, insbesondere teleskopierbar, ausgebildet, um eine Anpassung an eine unterschiedliche Anzahl von Reifen 16 - 22 bzw. unterschiedliche Breiten von Reifen 16 - 22 vornehmen zu können.

Im gezeigten Ausführungsbeispiel der Fig. 2 ist das Deckelelement 32 so ausgestaltet, dass es oben seitlich über den Reifenstapel übersteht. Dabei ist das Deckelelement 32 auch noch nach unten abgekantet. Im Bereich einer Abkantung ist ein Temperatursensor 40 vorgesehen, durch den die Temperatur der Außenseite des Reifens 22 erfasst werden kann. Weiterhin ist eine Anzeigeeinrichtung 42 am Deckelelement 32 vorgesehen, durch die bspw. die Temperatur, die durch den Temperatursensor 40 erfasst wurde, anzeigt werden kann. Nicht dargestellt ist eine Steuer- und Regelanordnung, mit der die Heizquelle 26 und der Lüfter 28 geregelt und gesteuert werden können.

## Patentansprüche

1. Reifentemperieranordnung (10, 100) zur Temperierung von Reifen (16, 18, 20, 22) vor deren Montage auf einer Felge, umfassend eine Bodenplatte (12), auf der ein oder mehrere zu erwärmende Reifen (16, 18, 20, 22) stapelbar sind, wobei an der Bodenplatte (12) eine sich vertikal von der Bodenplatte (12) nach oben erstreckende Heizanordnung (14) angeordnet ist, sodass diese in die Felgenaufnahme des oder der Reifen (16, 18, 20, 22) ragt, wenn diese auf der Bodenplatte (12) gestapelt sind.

2. Reifentemperieranordnung nach Anspruch 1, **dadurch gekennzeichnet, dass** ein Deckelelement (32) zur Ablage auf dem Reifenstapel vorgesehen ist.

3. Reifentemperieranordnung nach Anspruch 1 oder 2, **dadurch gekennzeichnet, dass** die Heizanordnung (14) eine Heizquelle (26), einen Lüfter (28) und einen Luftkanal (30) umfasst.

4. Reifentemperieranordnung nach einem der vorhergehenden Ansprüche, **dadurch gekennzeichnet, dass** die Heizquelle (26) als geripptes oder ungeripptes Rohrheizelement oder PTC-Heizelement ausgebildet ist.

5. Reifentemperieranordnung nach einem der vorhergehenden Ansprüche, **dadurch gekennzeichnet, dass** eine Steuerung oder Regelung für die Heizquelle (26) und/oder den Lüfter (28) vorgesehen ist.

6. Reifentemperieranordnung nach einem der vorhergehenden Ansprüche, **dadurch gekennzeichnet, dass** der Lüfter (28) als Radiallüfter ausgebildet ist.

7. Reifentemperieranordnung nach einem der vorhergehenden Ansprüche, **dadurch gekennzeichnet, dass** der Luftkanal (30) längenverstellbar ausgebildet ist, insbesondere teleskopierbar ist.

8. Reifentemperieranordnung nach einem der vorhergehenden Ansprüche, **dadurch gekennzeichnet, dass** an der Bodenplatte (12) Rollen (34) oder Räder angeordnet sind.

9. Reifentemperieranordnung nach einem der vorhergehenden Ansprüche, **dadurch gekennzeichnet, dass** die Bodenplatte (12) aus einem thermisch isolierenden Material ausgebildet ist.

10. Reifentemperieranordnung nach einem der vorhergehenden Ansprüche, **dadurch gekennzeichnet, dass** ein Temperatursensor (40), insbesondere am Deckelelement (32), vorzugsweise außerhalb des Reifenstapels angeordnet ist.

11. Reifentemperieranordnung nach einem der vorhergehenden Ansprüche, **dadurch gekennzeichnet, dass** im Bereich der Bodenplatte (12) zumindest ein Luftleitelement (36, 38) vorgesehen ist.

12. Reifentemperieranordnung nach einem der vorhergehenden Ansprüche, **dadurch gekennzeichnet, dass** eine Anzeigeeinrichtung (42) vorgesehen ist.

13. Reifentemperieranordnung nach einem der vorhergehenden Ansprüche, **dadurch gekennzeichnet, dass** diese demontierbar ist.
